# EUROPÄISCHE PATENTSCHRIFT

(11) **EP 1 001 671 B1**
(45) Veröffentlichungstag und Bekanntmachung des Hinweises auf die Patenterteilung: **19.01.2005**
(21) Anmeldenummer: 99121365.3
(22) Anmeldetag: 27.10.1999
(51) Int. Cl.: H05K 7/20, H02J 9/00

(54) **Vorrichtung zur unterbrechungsfreien Stromversorgung**
Device for uninterruptible power supply
Dispositif d'alimentaion électrique sans coupure

(30) Priorität: 12.11.1998 DE 19852125
(43) Veröffentlichungstag der Anmeldung: 17.05.2000
(73) Patentinhaber: RWE Piller GmbH, 37520 Osterode am Harz (DE)
(72) Erfinder: Gosebruch, Harald, Dr., 27283 Verden (DE)
(74) Vertreter: Patentanwälte Rehberg + Hüppe

(56) Entgegenhaltungen:
- FR-A- 1 357 702
- US-A- 3 596 711
- US-A- 3 851 221
- US-A- 4 449 580
- US-A- 5 801 937

## Beschreibung

Die Erfindung bezieht sich auf eine Vorrichtung zur unterbrechungsfreien Stromversorgung, wobei die Vorrichtung zwischen eine Wechsel- oder Drehstromquelle, deren Unterbrechungen zu überbrücken sind, und einen oder mehrere mit Wechsel- oder Drehstrom zu versorgende(n) Verbraucher zu schalten ist, mit mindestens einem Gleichrichter für den ankommenden Wechselstrom, mit Akkumulatoren für das Zwischenspeichern elektrischer Energie, mit mindestens einem Wechselrichter für die Batteriespannung der Akkumulatoren und mit einer Steuerelektronik, wobei elektrische Wickelkörper, insbesondere Spulen und Drosseln, und elektronische Halbleiterbausteine vorgesehen sind, die von einem Leistungsstrom durchflossen werden.

Vorrichtungen zur unterbrechungsfreien Stromversorgung, die Unterbrechungen einer Wechsel- oder Drehstromquelle mit Hilfe von in Akkumulatoren gespeicherter elektrischer Energie überbrücken, werden auch als statische USV's (USV = unterbrechungsfreie Stromversorgung) bezeichnet.

Die von einem Leistungsstrom durchflossenen elektrischen Wickelkörper und elektronischen Halbleiterbausteine einer USV müssen gekühlt werden. Die Verlustleistungen dieser Bauteile sind auch bei relativ hohen Wirkungsgraden der USV's von typischerweise 95 bis 97 % absolut gesehen so groß, daß sie sich ohne eine Kühlung sehr schnell bis zur Selbstzerstörung aufheizen würden. Die durch die Wickelkörper und die Halbleiterbausteine aufgeheizte Luft muß typischerweise durch eine Klimaanlage wieder abgekühlt werden, da sich eine USV häufig in abgeschlossenen Räumen befindet, die sonst ihrerseits unkontrolliert aufgeheizt würden.

Eine Vorrichtung zur unterbrechungsfreien Stromversorgung der eingangs beschriebenen Art ist aus der US 5 801 937 bekannt. Dort ist auch beschrieben, daß nicht der gesamte Leistungsstrom zu dem Verbraucher hin über die Gleich- und Wechselrichter fließen muß, sondern teilweise auch an diesen vorbeigeführt werden kann. Weiterhin wird eine Flüssigkeitskühlung für Halbleiterbausteine, beispielsweise von Festkörperschaltern in Form sogenannter MOSFET's oder IGBT's vorgeschlagen. Die Kühlung dient dazu, die thermische Anregung der Halbleiterbausteine sehr stark zu reduzieren. Entsprechend sollen als Kühlflüssigkeiten Kryoflüssigkeiten oder flüssiger Stickstoff verwendet werden. Der hierzu erforderliche technische Aufwand ist erheblich.

Aus der FR 13 577 702 ist es bekannt, einen Trafo in einer ersten Kühlflüssigkeit anzuordnen, während zugehörige Dioden in thermischem Kontakt mit einer zweiten Kühlflüssigkeit stehen. Die Kühlflüssigkeiten sind durch eine Gehäusewandung räumlich voneinander getrennt, die aber einen Wärmeübergang zuläßt. In einem jeweils eigenen Leitungssystem mit einer separaten Pumpe und einem separaten Kühler werden die Kühlflüssigkeiten umgepumpt, bei denen es sich jeweils um Öl handelt. Dabei besteht die grundsätzliche Gefahr von Verunreinigungen der ersten Kühlflüssigkeit, in der sich der Trafo befindet.

Aus dem Transformatorenbau ist es bekannt, elektrische Wickelkörper, die von einem Leistungsstrom durchflossen werden, in eine Kühlflüssigkeit einzutauchen. Hierfür sind spezielle hochisolierende Kühlflüssigkeiten bekannt. Die Kühlflüssigkeiten reichen dabei an Wärmeaustauschflächen heran, über die sie die aufgenommene Wärme an die Umgebungsluft abgeben. Die Kühlflüssigkeiten können zur Verbesserung ihres Wirkungsgrads auch umgepumpt werden.

Der Erfindung liegt die Aufgabe zugrunde, eine Vorrichtung der Eingangs beschriebenen Art aufzuzeigen, die eine zuverlässige Kühlung der Wickelkörper und der Halbleiterbausteine, die von einem Leistungsstrom durchflossen werden, auch über sehr große Zeiträume hinweg sicherstellt. Die neue Vorrichtung soll in besonderer Weise dazu geeignet sein, in verschiedene Gesamtkühlkonzepte integriert zu werden.

Erfindungsgemäß wird diese Aufgabe durch die Merkmale des Anspruchs 1 gelöst.

Die neue Vorrichtung zur unterbrechungsfreien Stromversorgung weist eine Flüssigkeitskühlung für die von einem Leistungsstrom durchflossenen Wickelkörper und Halbleiterbausteine auf. Hiermit ist bereits der grundsätzliche Vorteil verbunden, daß keine Kühlluft von außen durch die Vorrichtung hindurchgeführt werden muß, die zum Aufbau von Verschmutzungen führen kann, die unter den in einer typischen USV auftretenden hohen Spannungen langfristig die Ursache von Durchschlägen und Kurzschlüssen sein können. Bei der neuen Vorrichtung zur unterbrechungsfreien Stromversorgung ist für die Wickelkörper eine erste Kühlflüssigkeit vorgesehen, die sich nur in einem Becken befindet. Dies ist von Vorteil, weil diese Flüssigkeit besondere isolierende Eigenschaften aufweisen muß, die sie für ein stetiges Umpumpen in einem größeren Leitungssystem mit der damit verbundenen Verschmutzungsgefahr ungeeignet machen. Außerdem sind derartige Flüssigkeiten in aller Regel umweltgefährdend, auch wenn es sich heutzutage nicht mehr unbedingt um PCB-enthaltende Stoffe handeln muß. Die zweite Kühlflüssigkeit, die der ersten Kühlflüssigkeit die in dem Becken von den Wickelkörpern aufgenommene Wärme wieder entzieht und die auch die Halbleiterbausteine kühlt, muß keine besonderen elektrischen Anforderungen erfüllen. Ihre Auswahl ist damit weniger kritisch. Ebenso wird sie durch gewisse Verunreinigungen nicht so bald ihrer Funktionsfähigkeit beraubt. Die Kühlung der Wickelkörper ist sichergestellt, weil sie in die erste Kühlflüssigkeit eingetaucht sind und damit über alle ihre Oberflächen Wärme abgeführt werden kann. Die ausreichende Kühlung der Halbleiterbausteine wird durch ihre direkte Anbindung an das Leitungssystem für die grundsätzlich kältere zweite Kühlflüssigkeit sichergestellt.

In der bevorzugten Ausführungsform der neuen Vorrichtung ist das Becken für die erste Kühlflüssigkeit zumindest partiell mit einer Doppelwandung ausgebildet, wobei die Doppelwandung Teil des Leitungssystems für die zweite Kühlflüssigkeit ist und wobei die Halbleiterbausteine an dem äußeren Teil der Doppelwandung angeordnet sind. Zumindest in dem doppelwandigen Bereich des Beckens wird verhindert, daß irgendwelche Wärme aus dem Inneren des Beckens über die Wandung direkt auf weitere Bauteile der Vorrichtung zur unterbrechungsfreien Stromversorgung übertragen wird. Die Erwärmung der Wickelkörper wird damit von allen weiteren Bestandteilen der USV im wesentlichen abgeschirmt. Für die Halbleiterbausteine ist der äußere Teil der Doppelwandung als Montageort besonders gut geeignet, weil hier viel Platz mit einer guten Anbindung an das Leitungssystem für die zweite Kühlflüssigkeit zur Verfügung steht.

Der innere Teil der Doppelwandung kann mit Wärmeaustauschflächenvergrößerungen, insbesondere in Form von in die erst Kühlflüssigkeit hineinragenden Rippen versehen sein. Hierdurch wird die pro Zeiteinheit bei einer festen Temperaturdifferenz zwischen den beiden Kühlflüssigkeiten übertragbare Wärmemenge gesteigert. Eine weitere Steigerungsmöglichkeit besteht darin, zumindest die zweite Kühlflüssigkeit im Bereich der Wärmeaustauschflächen stark umzuwälzen oder gar in Turbulenz zu versetzen. Eine Umwälzung der ersten Kühlflüssigkeit kann jedoch nachteilig für die Standzeit der ersten Kühlflüssigkeit sein, wenn es hierdurch potentiell zu Verunreinigungen der ersten Kühlflüssigkeit kommt.

Der äußere Teil der Doppelwandung kann mit Durchbrechungen versehen sein, die unter Zwischenordnung von umlaufenden Dichtungen von den Halbleiterbausteinen verschlossen werden. Dabei bedeutet die Zwischenordnung der Dichtungen, daß sich diese im Randbereich der Durchbrechungen zwischen dem äußeren Teil der Doppelwandung und dem rückwärtigen Teil der Halbleiterbausteine befinden. So reicht die zweite Kühlflüssigkeit unmittelbar an die Halbleiterbausteine heran, wodurch die Effektivität deren Kühlung gesteigert wird.

Um Verunreinigungen der ersten Kühlflüssigkeit zu vermeiden, ist das Becken allseitig geschlossen auszubilden. Um dabei thermischen Ausdehnungen der ersten Kühlflüssigkeit Rechnung zu tragen, muß irgendein Druckausgleichsmittel vorgesehen sein. Ein solches Druckausgleichsmittel kann beispielsweise ein komprimierbares Gasvolumen aufweisen. Bei ausreichender Größe des Gasvolumens führt weder eine Temperatursteigerung noch seine Kompression zu einer nennenswerten Drucksteigerung in dem geschlossenen Becken.

Um jegliche Verunreinigungen der neuen Vorrichtung von außen zu verhindern, kann ein geschlossenes Gehäuse für alle elektronischen und elektrischen Bestandteile der Vorrichtung vorgesehen sein, aus dem bzw. in das nur Stromleitungen und Leitungen für die zweite Kühlflüssigkeit heraus- bzw. hereinführen.

Um der zweiten Kühlflüssigkeit Wärme zu entziehen, kann ein Wärmetauscher vorgesehen sein. Dieser Wärmetauscher kann in einem Bereich der Vorrichtung angeordnet sein, der an das geschlossene Gehäuse für alle elektrischen und elektronischen Bestandteile der Vorrichtung angrenzt. Es ist aber auch möglich, den Wärmetauscher weiter entfernt von den restlichen Bestandteilen der Vorrichtung anzuordnen, beispielsweise bei einer in einem Kellerraum angeordneten USV irgendwo im Freien. Dies bietet sich insbesondere an, wenn der Wärmetauscher als Kühler mit einem Luftgebläse ausgebildet ist. Grundsätzlich kann ein solcher Kühler mit einem Luftgebläse aber auch direkt an die restlichen Bestandteile der Vorrichtung angebaut sein.

Bei dem Wärmetauscher für die zweite Kühlflüssigkeit kann es sich um eine Flüssig-Flüssig-Wärmetauscher mit einer dritten Kühlflüssigkeit handeln. Ein solcher Wärmetauscher ist vorzugsweise in einem an das geschlossene Gehäuse für alle elektronischen und elektrischen Bestandteile der Vorrichtung angrenzenden Abteil der Vorrichtung untergebracht. Die dritte Kühlflüssigkeit kann an einem geeigneten Ort in einem Kühler mit Umgebungsluft gekühlt werden. Bei der dritten Kühlflüssigkeit kann es sich auch um den Wasserkreislauf einer zentralen Klimaanlage handeln.

Während die erste Kühlflüssigkeit vorzugsweise eine aus dem Transformatorenbau bekannte Kühlflüssigkeit mit hoher Isolationswirkung ist, kann die zweite Kühlflüssigkeit einfaches Wasser sein, dem korrosionshindernde Zusätze zugegeben sein können.

Die Erfindung wird im folgenden anhand von Ausführungsbeispielen näher erläutert und beschrieben. Dabei sind in den beigefügten Zeichnungen die verschiedenen Ausführungsformen in Form von Prinzipschaubildern wiedergegeben. Die elektrischen und elektronischen Details von USV's sind dem Fachmann bekannt. Auf sie wird hier nicht näher eingegangen werden. In den Zeichnungen zeigt
- Figur 1: die für die Erfindung wesentlichen Bestandteile der neuen Vorrichtung zur unterbrechungsfreien Stromversorgung in einer ersten Ausführungsform,
- Figur 2: ein erstes Detail eines Beckens für eine erste Kühlflüssigkeit bei der Vorrichtung zur unterbrechungsfreien Stromversorgung gemäß Figur 1,
- Figur 3: ein zweites Detail des Beckens,
- Figur 4: eine abgewandelte Ausführungsform des Beckens,
- Figur 5: die neue Vorrichtung zur unterbrechungsfreien Stromversorgung in einer gegenüber Figur 1 weiterentwickelten Ausführungsform und
- Figur 6: die Vorrichtung zur unterbrechungsfreien Stromversorgung in einer gegenüber Figur 5 alternativen Ausführungsform.

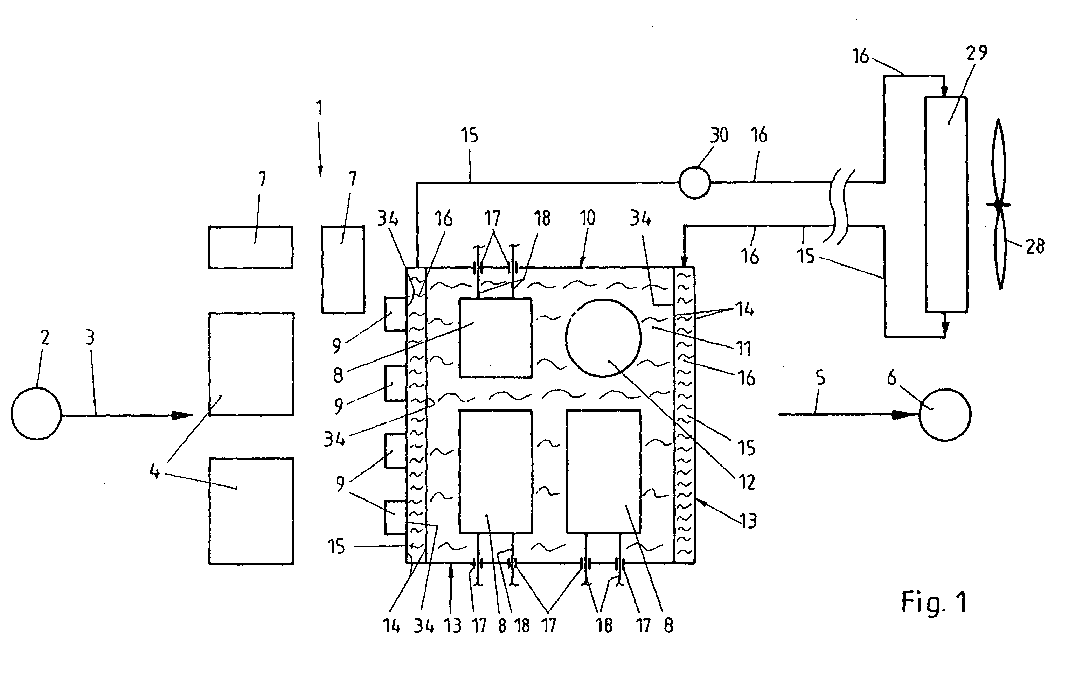

Figur 1 zeigt eine Vorrichtung 1, die zur unterbrechungsfreien Stromversorgung dient. Ein von einer Wechselstromquelle 2 kommender Wechselstrom, der durch einen Pfeil 3 angedeutet ist, wird in der Vorrichtung 1 gleichgerichtet. Die gleichgerichtete Spannung wird an Akkumulatoren 4 angelegt. Die Batteriespannung der Akkumulatoren wird wieder wechselgerichtet und der als Pfeil 5 angedeutete Ausgangswechselstrom gelangt zu einem Verbraucher 6. Die Gleich- und Wechselrichter der Vorrichtung 1 sowie eine zugehörige Steuerelektronik, die beispielsweise auch dafür sorgen kann, daß nur ein Teil des ankommenden Wechselstroms gleich- und wieder wechselgerichtet wird, umfaßt neben anderen elektrischen und elektronischen Bestandteilen 7 verschiedene elektrische Wickelkörper 8 und verschiedene elektronische Halbleiterbausteine 9, die jeweils von einem Leistungsstrom durchflossen werden. Die dabei anfallende Verlustwärme muß abgeführt werden, um eine Überhitzung der Wickelkörper 8 bzw. der Halbleiterbausteine 9 zu verhindern, die zu einer Selbstzerstörung führen würde. Bei den Wickelkörpern 8 kann es sich um Spulen, Drosseln und Wicklungen von Transformatoren handeln. Die Halbleiterbausteine 9 können beispielsweise Festkörperschalter in Form von IGBT's sein. Die Kühlung der Wickelkörper 8 und der Halbleiterbausteine 9 wird bei der Vorrichtung 1 bewirkt, indem die Wickelkörper 8 in einem geschlossenen Becken 10 angeordnet sind, das mit einer ersten Kühlflüssigkeit 11 befüllt ist. Thermische Ausdehnungen der ersten Kühlflüssigkeit 11 werden durch einen gasbefüllten Ballon 12 ausgeglichen. Die Wandung 13 des Beckens 10 ist zumindest partiell als Doppelwandung 14 ausgebildet, wobei die Doppelwandung 14 Teil eines Leitungssystems 15 für eine zweite Kühlflüssigkeit 16 ist. Während die erste Kühlflüssigkeit 11 besondere isolierende Eigenschaften aufweist, handelt es sich bei der zweiten Kühlflüssigkeit 16 um Wasser. Die Wandung 13 ist gegenüber den Wickelkörpern 8 isoliert. Hierzu sind isolierende Durchführungen 17 für die elektrischen Zu- und Ableitungen 18 zu den Wickelkörpern 8 vorgesehen. Die zweite Kühlflüssigkeit 16 dient über Wärmeaustauschflächen 34 gleichzeitig zur Kühlung der ersten Kühlflüssigkeit 11 und der Halbleiterbausteine 9, die in einem Bereich der Doppelwandung 14 an deren äußeren Teil angeordnet sind. Durch die erste Kühlflüssigkeit 11 sind die Wickelkörper 8 vor äußeren Verunreinigungen geschützt. Das Becken 10 schützt die erste Kühlflüssigkeit 11 ihrerseits vor Verunreinigungen. Die Halbleiterbausteine 9 sind weniger verunreingungsempflindlich und sind allein schon deshalb geschützt, weil sie nicht wie sonst üblich ständig von Kühlluft umströmt werden, die sich potentiell ablagernde Verunreinigung mit sich führt. Eine Pumpe 30 ist zum Umpumpen der zweiten Kühlflüssigkeit 16 durch einen Kühler 29 vorgesehen, der von einem Luftgebläse 28 mit Luft beeaufschlagt wird. Der Kühler 29 kann wie angedeutet entfernt von der restlichen Vorrichtung 1 angeordnet sein. Wenn die Vorrichtung beispielsweise in einem inneren Kellerraum steht, ist der Kühler 29 vorzugsweise irgendwo im Außenbereich angeordnet.

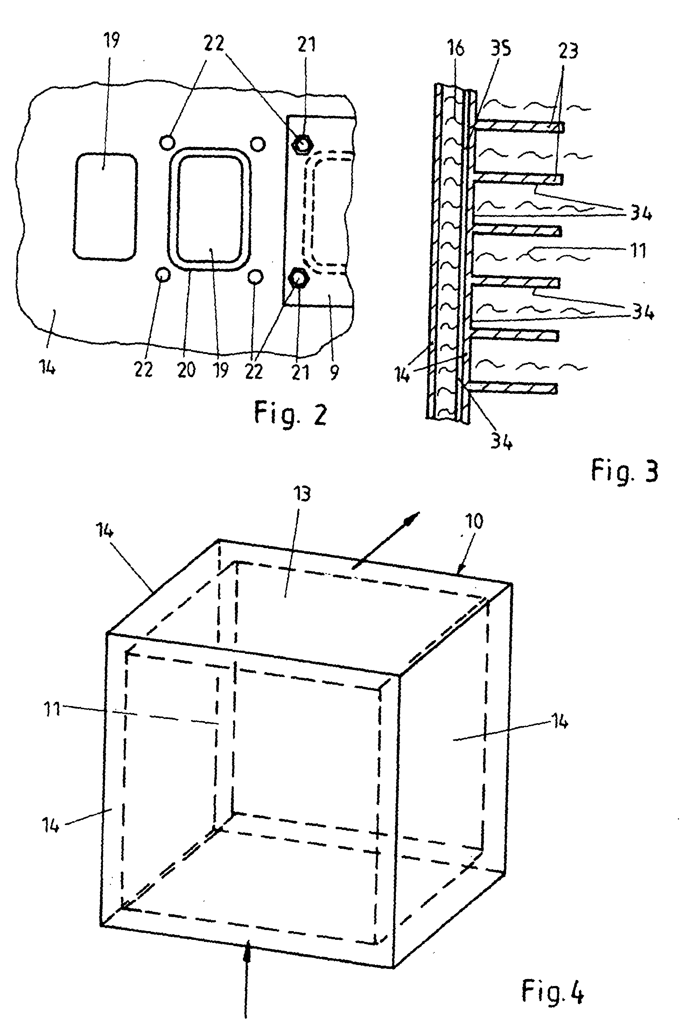

Die Anordnung der Halbleiterbausteine 9 an dem äußeren Teil der Doppelwandung 14 geht näher aus Figur 2 hervor. In dem äußeren Teil der Doppelwandung 14 sind Durchbrechungen 19 vorgesehen. Um diese Durchbrechungen 19 herum sind ringförmige Dichtungen 20 angeordnet. Über die Dichtungen 20 sind die Halbleiterbausteine 9 an die Doppelwandung 4 angedrückt. Dabei wird eine Andrückkraft durch Muttern 21 aufgebracht, die auf an die Doppelwandung 14 angeschweißte Gewindestangen 22 aufgeschraubt sind. In Figur 2 ist im linken Teil nur die reine Durchbrechung 19, in der Mitte die Durchbrechung 19 mit der Dichtung 20 und den Gewindestangen 22 und rechts ein Teil eines die Durchbrechung 19 unter Zwischenordnung der Dichtung 20 und unter Befestigung mit den Muttern 21 abdichtenden Halbleiterbausteins 9 wiedergegeben.

Figur 3 zeigt die Anordnung von Rippen 23 an der Seite des inneren Teils der Doppelwandung 14, der der ersten Kühlflüssigkeit zugewandt ist. Die Rippen 23 ragen in die erste Kühlflüssigkeit 11 hinein und vergrößern die Wärmeaustauschflächen 34 von der ersten Kühlflüssigkeit 11 auf den inneren Teil der Doppelwandung 14 und damit zwischen der ersten Kühlflüssigkeit 11 und der zweiten Kühlflüssigkeit 16. Weitere Rippen 35 können von der Doppelwandung in die zweite Kühlflüssigkeit 16 hineinragen, um auch hier die Wärmeaustauschflächen zu vergrößern. Der absolute Wärmeübertrag auf die zweite Kühlflüssigkeit 16 kann aber auch durch deren Umpumpen verbessert werden.

Figur 4 skizziert eine Ausführungsform des Beckens 10, in der dessen Wandung 13 allseitig als Doppelwandung 14 ausgebildet ist. Insbesondere ist die Wandung 13 an der Oberseite des Beckens 10 als Doppelwandung 14 ausgebildet, wodurch Konvektionen der ersten Kühlflüssigkeit 11 besonders gut ausgenutzt werden können. Allerdings bringt die allseitig doppelwandige Ausbildung des Beckens 10 einen höheren Aufwand bei den hier nicht dargestellten Durchführungen 17 für die elektrischen Zuleitungen 18 der hier ebenfalls nicht dargestellten Wickelkörper 8 mit sich. So kann es sinnvoll sein, die Wandung 13 zumindest an einer Seitenfläche des Beckens 10 nicht als Doppelwandung 14 auszubilden.

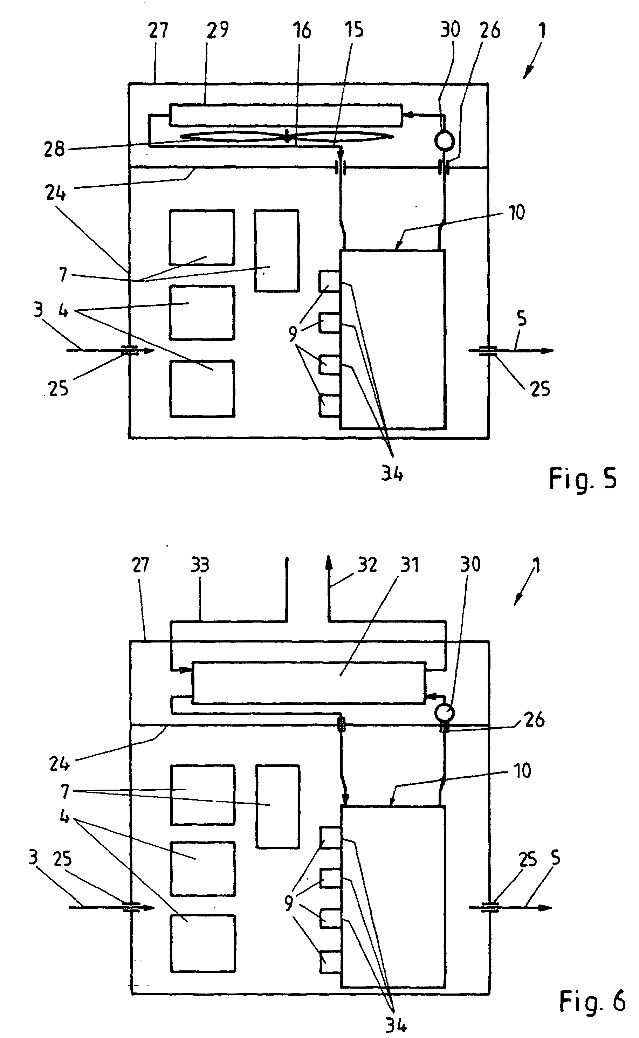

Figur 5 zeigt über Figur 1 hinausgehend ein Gehäuse 24 für alle in Figur 1 dargestellten elektrischen und elektronischen Bestandteile der Vorrichtung 1. Dieses Gehäuse ist bis auf Durchführungen 25 für die Zufuhr und Abfuhr des Wechselstroms und Durchführungen 26 für das Leitungssystem 15 der zweiten Kühlflüssigkeit 16 geschlossen ausgebildet. So wird jede Verschmutzung der elektrischen und elektronischen Bestandteile der Vorrichtung 1 vermieden. Ein solches Gehäuse kann auch bei der Ausführungsform der Vorrichtung 1 gemäß Figur 1 vorgesehen sein. Oberhalb des Gehäuses 24 ist hier ein luftdurchlässiges Abteil 27 vorgesehen, in dem das den Kühler 29 für die Kühlflüssigkeit 16 beaufschlagende Luftgebläse 28 angeordnet ist. Das heißt, die Kühlflüssigkeit 16 wird mit Umgebungsluft der Vorrichtung 1 gekühlt. Wenn die Vorrichtung 1 gemäß Figur 5 in einem geschlossenen Raum angeordnet wird, muß die Raumluft in aller Regel zusätzlich, beispielsweise durch eine Klimaanlage, gekühlt werden.

Eine unmittelbare Abfuhr der Wärme aus einem solchen Raum ist wieder bei der Ausführungsform der Vorrichtung 1 gemäß Figur 6 gegeben. Hier ist in dem oberen Abteil 27, das hier nicht luftdurchlässig sein muß, ein Flüssig-Flüssig-Wärmetauscher 31 vorgesehen, indem der zweiten Kühlflüssigkeit 16 die Wärme durch eine dritte Kühlflüssigkeit 32 entzogen wird, die in einem Leitungssystem 33 zirkuliert. Das Leitungssystem 33 kann zu einem externen luftgekühlten Kühler führen. Es kann sich auch um das Leitungssystem einer zentralen Klimaanlage handeln, wie sie in vielen Großgebäuden vorhanden ist. Insbesondere in diesem Fall und entsprechenden Fällen macht die Verwendung einer im Vergleich zu der Ausführungsform gemäß Figur 1 zusätzlichen Kühlflüssigkeit Sinn, um das zentrale Leitungssystem von dem durch das Gehäuse 24 führenden Leitungssystem aus Sicherheitsgründen zu trennen. Auffällig ist, daß der Aufbau der Vorrichtung 1 innerhalb des Gehäuses 24 in beiden Ausführungsformen gemäß den Figuren 5 und 6 vollständig identisch ist. Auch bei der Ausführungsform der Vorrichtung 1 gemäß Figur 1 kann dieser Aufbau verwirklicht werden, so daß eine universelle Baueinheit die verschiedenen Einsatzvarianten abdeckt.

### BEZUGSZEICHENLISTE

- 1 -: Vorrichtung (USV)
- 2 -: Stromquelle
- 3 -: Pfeil
- 4 -: Akkumulator
- 5 -: Pfeil
- 6 -: Verbraucher
- 7 -: Bestandteil
- 8 -: Wickelkörper
- 9 -: Halbleiterbaustein
- 10 -: Becken
- 11 -: erste Kühlflüssigkeit
- 12 -: Ballon
- 13 -: Wandung
- 14 -: Doppelwandung
- 15 -: Leitungssystem
- 16 -: zweite Kühlflüssigkeit
- 17 -: Durchführung
- 18 -: Leitung
- 19 -: Durchbrechung
- 20 -: Dichtung
- 21 -: Mutter
- 22 -: Gewindestange
- 23 -: Rippe
- 24 -: Gehäuse
- 25 -: Durchführung
- 26 -: Durchführung
- 27 -: Abteil
- 28 -: Luftgebläse
- 29 -: Kühler
- 30 -: Pumpe
- 31 -: Wärmetauscher
- 32 -: dritte Kühlflüssigkeit
- 33 -: Leitungssystem
- 34 -: Wärmeaustauschfläche
- 35 -: Rippe

## Patentansprüche

1. Vorrichtung zur unterbrechungsfreien Stromversorgung, wobei die Vorrichtung zwischen eine Wechsel- oder Drehstromquelle, deren Unterbrechungen zu überbrücken sind, und einen oder mehrere mit Wechsel- oder Drehstrom zu versorgende(n) Verbraucher zu schalten ist, mit mindestens einem Gleichrichter für den ankommenden Wechselstrom, mit Akkumulatoren für das Zwischenspeichern elektrischer Energie, mit mindestens einem Wechselrichter für die Batteriespannung der Akkumulatoren und mit einer Steuerelektronik, wobei elektrische Wickelkörper, insbesondere Spulen und Drosseln, und elektronische Halbleiterbausteine vorgesehen sind, die von einem Leistungsstrom durchflossen werden, **dadurch gekennzeichnet, daß** ein mit einer ersten isolierenden Kühlflüssigkeit (11) befülltes geschlossenes Becken (10) vorgesehen ist, in dem die Wickelkörper (8) angeordnet sind, und daß außerhalb der ersten Kühlflüssigkeit (11) ein Leitungssystem (15) für eine zweite Kühlflüssigkeit (16) vorgesehen ist, das der ersten Kühlflüssigkeit (11) und den Halbleiterbausteinen (9) zugewandte Wärmeaustauschflächen (34) aufweist.

2. Vorrichtung nach Anspruch 1, **dadurch gekennzeichnet, daß** das Becken (10) zumindest partiell mit einer Doppelwandung (14) ausgebildet ist, wobei die Doppelwandung (14) Teil des Leitungssystems (15) für die zweite Kühlflüssigkeit (16) ist und wobei die Halbleiterbausteine (9) an dem äußeren Teil der Doppelwandung (14) angeordnet sind.

3. Vorrichtung nach Anspruch 2, **dadurch gekennzeichnet, daß** der innere Teil der Doppelwandung (14) mit Wärmeaustauschflächenvergrößerungen, insbesondere in Form von in die erste Kühlflüssigkeit (11) hineinragenden Rippen (23), versehen ist.

4. Vorrichtung nach Anspruch 2 oder 3, **dadurch gekennzeichnet, daß** der äußere Teil der Doppelwandung (14) mit Durchbrechungen (19) versehen ist, die unter Zwischenordnung von umlaufenden Dichtungen (20) von den Halbleiterbausteinen (9) verschlossen werden.

5. Vorrichtung nach einem der Ansprüche 1 bis 4, **dadurch gekennzeichnet, daß** ein Druckausgleichsmittel (12) für die erste Kühlflüssigkeit (11) vorgesehen ist.

6. Vorrichtung nach Anspruch 5, **dadurch gekennzeichnet, daß** das Druckausgleichsmittel (12) ein komprimierbares Gasvolumen aufweist.

7. Vorrichtung nach einem der Ansprüche 1 bis 6, **dadurch gekennzeichnet, daß** ein geschlossenes Gehäuse (24) für alle elektrischen und elektronischen Bestandteile (4, 7, 8, 9) der Vorrichtung (1) vorgesehen ist, aus dem bzw. in das nur Stromleitungen und Leitungen für die zweite Kühlflüssigkeit (16) heraus- bzw. hineinführen.

8. Vorrichtung nach einem der Ansprüche 1 bis 7, **dadurch gekennzeichnet, daß** ein Wärmetauscher ((29, 31) für die zweite Kühlflüssigkeit (16) vorgesehen ist, um dieser Wärme zu entziehen.

9. Vorrichtung nach Anspruch 8, **dadurch gekennzeichnet, daß** der Wärmetauscher als Kühler (29) mit einem Luftgebläse (28) oder als Wärmetauscher (31) mit einer dritten Kühlflüssigkeit (32) ausgebildet ist.

10. Vorrichtung nach einem der Ansprüche 1 bis 9, **dadurch gekennzeichnet, daß** die erste Kühlflüssigkeit (11) eine aus dem Transformatorenbau bekannte Kühlflüssigkeit und die zweite Kühlflüssigkeit (16) Wasser ist.

## Claims

1. A device for uninterruptible power supply, the device being to be connected between an alternating or rotary current source whose interruptions are to be bridged, and one or more moulds to be supplied with alternating or rotary current, the device comprising at least one rectifier for the incoming alternating current accumulators for intermediately storing electrical energy, at least one inverted rectifier for the accumulator voltage of the accumulators and control circuitry, electrical spools, particularly coils and jokes, and electronic semiconductor units being provided through which a power current flows, **characterized in that** a closed basin (10) filled with a first isolating cooling liquid (11) is provided in which the spools (8) are arranged, an that a conduit system (15) is provided for a second cooling liquid (16) outside of the first cooling liquid (11) which has heat exchange surfaces (34) facing towards the first cooling liquid (11) and the semiconductor units (9).

2. The device of claim 1, **characterized in that** the basin (10) is at least partially constructed with a double wall (14), the double wall (14) being part of the conduit system (15) for the second cooling liquid (16), and the semiconductor units (9) being arranged at the outer part of the double wall (14).

3. The device of claim 2, **characterized in that** the inner part of the double wall (14) is provided with heat exchange surface extensions, particularly in form of rips (23) extending into the first cooling liquid (11).

4. The device of claim 2 or 3, **characterized in that** the outer part of the double wall (14) is provided with openings (19), which are closed by the semiconductor units (9) with encompassing sealing (20) arranged in between.

5. The device of any of the claims 1 to 5, **characterized in that** a pressure equalizing means (12) is provided for the first cooling liquid (11).

6. The device according to claim 5, **characterized in that** the pressure equalizing means (12) comprises a compressible gas volume.

7. The device of any of the claims 1 to 6, **characterized in that** a close housing (24) is provided for all electric and electronic parts (4, 7, 8, 9) of the device (1), only the current lines and conduits for the second cooling liquid (16) running into which or out of which.

8. The device of any of the claims 1 to 7, **characterized in that** a heat exchanger (29, 31) is provided for the second cooling liquid (16), to remove heat from it.

9. The device of claim 8, **characterized in that** the heat exchanger is constructed as a cooler (19) with an air fan (28) or as a heat exchanger (31 ) with a third cooling liquid (32).

10. The device of any of the claims 1 to 9, **characterized in that** the first cooling liquid (11) is a cooling liquid known from the construction of current transformers, and the second cooling liquid (16) is water.

## Revendications

1. Dispositif d'alimentation ininterrompue en courant, dans lequel le dispositif doit être inséré entre une source de courant alternatif ou source de courant triphasé dont les coupures doivent être pontées, et un ou plusieurs récepteurs à alimenter en courant alternatif ou courant triphasé, comportant au moins un redresseur pour le courant alternatif arrivant, des accumulateurs pour l'accumulation temporaire d'énergie électrique, au moins un onduleur pour la tension de la batterie des accumulateurs, et une électronique de commande, des corps électriques bobinés, en particulier des bobines et des organes d'étranglement, ainsi que des composants électroniques à semi-conducteurs étant prévus, qui sont traversés par un courant de puissance, **caractérisé en ce qu'**il est prévu un bac (10) fermé rempli d'un premier liquide de refroidissement isolant (11) dans lequel sont disposés les corps bobinés (8), et **en ce qu'**en dehors du premier liquide de refroidissement (11) est prévu un système de conduites (15) pour un deuxième liquide de refroidissement (16), qui comporte des surfaces d'échange de chaleur (34) tournées vers le premier liquide de refroidissement (11) et les composants à semi-conducteurs (9).

2. Dispositif selon la revendication 1, **caractérisé en ce que** le bac (10) est réalisé au moins en partie avec une double paroi (14), la double paroi (14) faisant partie du système de conduites (15) pour le deuxième liquide de refroidissement (16) et les composants à semi-conducteurs (9) étant disposés sur la partie extérieure de la double paroi (14).

3. Dispositif selon la revendication 2, **caractérisé en ce que** la partie intérieure de la double paroi (14) est pourvue d'agrandissements des surfaces d'échange de chaleur, en particulier sous la forme d'ailettes (23) pénétrant à l'intérieur du premier liquide de refroidissement (11).

4. Dispositif selon la revendication 2 ou 3, **caractérisé en ce que** la partie extérieure de la double paroi (14) est pourvue d'ajours (19) qui sont fermés avec interposition de garnitures d'étanchéité (20) périphériques, par les composants à semi-conducteurs (9).

5. Dispositif selon l'une des revendications 1 à 4, **caractérisé en ce qu'**il est prévu un moyen de compensation de la pression (12) pour le premier liquide de refroidissement (11).

6. Dispositif selon la revendication 5, **caractérisé en ce que** le moyen de compensation de la pression (12) est un volume de gaz compressible.

7. Dispositif selon l'une des revendications 1 à 6, **caractérisé en ce qu'**il est prévu un boîtier (24) fermé pour tous les constituants électriques et électroniques (4, 7, 8, 9) du dispositif (1), duquel ne ressortent ou dans lequel n'entrent que des lignes électriques et des conduites pour le deuxième liquide de refroidissement (16).

8. Dispositif selon l'une des revendications 1 à 7, **caractérisé en ce qu'**un échangeur de chaleur (29, 31) est prévu pour le deuxième liquide de refroidissement (16), afin de lui soustraire de la chaleur.

9. Dispositif selon la revendication 8, **caractérisé en ce que** l'échangeur de chaleur est conçu comme refroidisseur (29) avec une soufflante d'air (28) ou comme échangeur de chaleur (31) avec un troisième liquide de refroidissement (32).

10. Dispositif selon l'une des revendications 1 à 9, **caractérisé en ce que** le premier liquide de refroidissement (11) est un liquide de refroidissement connu dans la construction des transformateurs, et le deuxième liquide de refroidissement (16) est de l'eau.
